(19)

Europäisches
Patentamt
European
Patent Office
Office européen
des brevets

(11)  **EP 1 716 537 B1**

(12)  **EUROPEAN PATENT SPECIFICATION**

(45) Date of publication and mention
of the grant of the patent:
**11.03.2009 Bulletin 2009/11**

(51) Int Cl.:
*G06T 5/50* (2006.01)     *G06T 11/00* (2006.01)

(21) Application number: **05702857.3**

(86) International application number:
**PCT/IB2005/050419**

(22) Date of filing: **01.02.2005**

(87) International publication number:
**WO 2005/078661 (25.08.2005 Gazette 2005/34)**

(54) **APPARATUS AND METHOD FOR THE PROCESSING OF SECTIONAL IMAGES**

VORRICHTUNG UND VERFAHREN ZUR VERABREITUNG VON SCHNITTBILDERN

DISPOSITIF ET PROCEDE DE TRAITEMENT DE D'IMAGES EN COUPE

(84) Designated Contracting States:
**AT BE BG CH CY CZ DE DK EE ES FI FR GB GR HU IE IS IT LI LT LU MC NL PL PT RO SE SI SK TR**

(30) Priority: **11.02.2004 EP 04100517**

(43) Date of publication of application:
**02.11.2006 Bulletin 2006/44**

(73) Proprietors:
• **Philips Intellectual Property & Standards GmbH
20099 Hamburg (DE)**
Designated Contracting States:
**DE**
• **Koninklijke Philips Electronics N.V.
5621 BA Eindhoven (NL)**
Designated Contracting States:
**AT BE BG CH CY CZ DK EE ES FI FR GB GR HU IE IS IT LI LT LU MC NL PL PT RO SE SI SK TR**

(72) Inventors:
• **WIEGERT, Jens,
Philips Intel. Prop. & Std. GmbH.
52066 Aachen (DE)**
• **ROSE, Georg,
Philips Intel. Prop. & Std. GmbH.
52066 Aachen (DE)**
• **WEESE, Jürgen,
hilips Intel. Prop. & Std. GmbH.
52066 Aachen (DE)**

(56) References cited:
• **READER A J ET AL: "Adaptive correction of scatter and random events for 3-D backprojected PET data" IEEE TRANSACTIONS ON NUCLEAR SCIENCE IEEE USA, vol. 48, no. 4, August 2001 (2001-08), pages 1350-1356, XP002323902 ISSN: 0018-9499**
• **WATSON C C: "New, faster, image-based scatter correction for 3D PET" IEEE TRANSACTIONS ON NUCLEAR SCIENCE IEEE USA, vol. 47, no. 4, 4 August 2000 (2000-08-04), pages 1587-1594, XP002323734 ISSN: 0018-9499**
• **ZAIDI H: "Scatter modelling and correction strategies in fully 3-D PET" NUCLEAR MEDICINE COMMUNICATIONS, vol. 22, no. 11, November 2001 (2001-11), pages 1181-1184, XP002323903 ISSN: 0143-3636**
• **CHERRY S R ET AL: "Effects of scatter on model parameter estimates in 3D PET studies of the human brain" IEEE TRANSACTIONS ON NUCLEAR SCIENCE USA, vol. 42, no. 4, August 1995 (1995-08), pages 1174-1179, XP002323904 ISSN: 0018-9499**
• **LOVE L.A.; KRUGER R.A.: 'SCATTER ESTIMATION FOR A DIGITAL RADIOGRAPHIC SYSTEM USING CONVOLUTION FILTERING' MEDICAL PHYSICS vol. 12, no. 2, March 1987, AIP, MELVILLE, NY, US, pages 178 - 185, XP000670575**

**Description**

The invention relates to a method and an apparatus for the processing of sectional images that are reconstructed from X-ray projections of an object, preferably from cone beam projections.

Reconstructed 3D sectional images in C-arm based volume imaging often exhibit spatially slowly varying inhomogeneities caused by inconsistent projection data due to various reasons. First, scattered radiation constitutes one of the main problems. Especially for system geometries with large cone angle and therefore a large irradiated area, such as C-arm based volume imaging, scattered radiation produces a significant background added to the desired detected signal and thus significant cupping shaped inhomogeneities occur in the reconstructed volume. Further sources of inhomogeneities are beam hardening (cupping) and insufficient truncation correction (cupping and inverse cupping).

When a tight gray level window is applied to the viewed slices in the reconstructed 3D image in order to find low contrast details, the inhomogeneities cause parts of the region of interest to be either below or above the edges of the applied window. Low contrast details are therefore much more difficult to find in presence of inhomogeneities.

Anti-scatter grids reduce the amount of detected scattered radiation, but the reduction is not sufficient for typical system geometries for volume imaging, by additionally increasing the signal-to-noise ratio. Different algorithms for projection based scatter compensation have been proposed (cf. Maher K. P., Malone J. F., "Computerized scatter correction in diagnostic radiology", Contemporary Physics, vol. 38, no.2, pp. 131-148, 1997), but accurate quantitative scatter estimation is difficult to achieve. Truncation correction schemes like elliptical extension of projections (as described in R. M. Lewitt, Processing of incomplete measurement data in computed tomography, Med. Phys., vol. 6, no. 5, pp. 412-417, 1979) can prevent severe shading artifacts at the boundaries of the FOV, but do not completely correct for global shading. Beam hardening correction is possible, but requires a deep knowledge of acquisition parameters, that is not always available.

READER A J ET AL: "Adaptive correction of scatter and random events for 3-D backprojected PET data" IEEE TRANSACTIONS ON NUCLEAR SCIENCE IEEE USA, vol. 48, no. 4, August 2001 (2001-08), pages 1350-1356, XP002323902 ISSN: 0018-9499; WATSON C C: "New, faster, image-based scatter correction for 3D PET" IEEE TRANSACTIONS ON NUCLEAR SCIENCE IEEE USA, vol. 47, no. 4, August 2000 (2000-08-04), pages 1587-1594, XP002323734 ISSN: 0018-9499; ZAIDI H: "Scatter modelling and correction strategies in fully 3-D PET" NUCLEAR MEDICINE COMMUNICATIONS, vol. 22, no. 11, November 2001 (2001-11), pages 1181-1184, XP002323903 ISSN: 0143-3636, all disclose prior art image processing systems used in position emission tomographie (PET) wherein the PET images are corrected to a certain degree for scattering and random artifacts. Therein, image correction can be based on artifacts measured in image regions outside the actual object under investigation.

"Love L.A. und Kruger R.A.: "Scatter estimation for a digital radiographic system using convolution filtering", Medical Physics, Volume 12, No. 2, March 1987 (1987-03), pages 178-185, AIP, Melville, NY, US, XP000670575 discloses a system for scatter estimation for a digital radiographic system using convolution filtering in order to estimate the scatter distribution in images acquired with a digital subtraction angiography (DSA) imaging system. Therein, artefacts can be estimated by a convolution-filtering method based on an entire acquired image.

Based on this situation it was an object of the present invention to provide simple means for improving sectional X-ray images that are affected by inhomogeneities.

This object is achieved by an apparatus with the features of claim 1 and a method with the features of claim 10. Preferred embodiments are subject of the dependent claims.

The apparatus according to the present invention is suited for the processing of sectional images of an object, wherein such sectional images are reconstructed from X-ray projections of the object that were taken from different directions. The apparatus may optionally be adapted to execute the reconstruction of the sectional images from projections or it may alternatively receive already reconstructed sectional images for further processing. The apparatus is adapted to execute the following steps with a sectional image under consideration:

- The determination of a baseline function that at least approximately describes spatially slowly varying artifacts of the images. As will be explained in more detail below, such kind of artifacts are quite typical for a class of sectional images reconstructed from X-ray projections.
- Calculating a corrected sectional image by compensating the original sectional image with the help of said baseline function, e.g. by subtracting the baseline function from the original image.

The apparatus has the advantage to (approximately) correct certain slowly varying artifacts, wherein the correction particularly makes the inspection of a small gray-value window possible. Because the apparatus does not try to correct the artifacts on the level of individual projections but processes the whole reconstructed sectional image, it has the further advantage to operate quite fast.

The sectional image that is processed by the apparatus may be a two-dimensional section through an object like the human body, or it may be three-dimensional and represent a volume of interest in an object. In both cases, the baseline function is of the same dimensionality as the original sectional image. In case of a three-dimensional sectional image, the baseline function may be composed of separate two-dimensional baseline functions, wherein each of these two-dimensional baseline functions is calculated for a two-dimensional slice from the original three-dimensional sectional image. In this case the separate two-dimensional baseline functions are preferably fitted to each other in neighbouring slices in order to achieve a smooth function all over the whole volume.

According to a preferred embodiment of the apparatus, the determination of the baseline function comprises the following two sub-steps:

- The segmentation of areas from the original sectional image, in which the reconstructed X-ray density lies within a given interval. This interval may especially comprise the X-ray density of water, such that the segmented areas correspond to regions of the object that primarily comprise water.
- Determination of the baseline function based only on data that correspond to said segmented areas. Preferably the segmentation is followed by the operation of erosion in order to avoid misleading results at the boundaries of the segmented areas.

The restriction of the search for the baseline functions to certain areas of the sectional images is especially successful in images of biological objects like the human brain. In this case, the image can roughly be subdivided into three classes, i.e. bone, air, and soft tissue, the latter corresponding in its properties approximately to those of water. The tissue areas may then be taken as a reference region for the desired calculation of the baseline function.

In a preferred embodiment of the apparatus described above, the baseline function is determined by fitting a parametric model function to the data in the segmented areas. The model function may be especially a polynomial (preferably of 4th to 6th degree) and/or a spline function.

According to another embodiment of the apparatus that calculates segmented areas, the baseline function is determined by low-pass filtering of data in the segmented areas. This approach is especially suited in cases where the segmented areas are spatially distributed over the whole image area such that the low-pass filtering will be able to fill the gaps in between them.

Still another approach for the determination of the baseline function is based on spectral filtering. In this case, the apparatus is adapted to execute the following steps:

- A spectral analysis (e.g. the three-dimensional Fourier decomposition) of the sectional images, or, in the case of an apparatus that segments the image, of the segmented areas of the sectional image.

- A composition of the baseline function from only the lower frequency components of the resulting spectrum.

An advantage of such an apparatus is that it may make use of existing algorithms and software libraries for spectral processing of images.

According to another embodiment of the apparatus, image areas outside the object are segmented in the original sectional image, and no correction of the original image is done there (i.e. the baseline function is set to zero in these areas). By this way stability of the results is improved.

The apparatus may especially comprise a rotational cone beam X-ray device for the generation of X-ray projections of an object. These projections may then be used for the reconstruction of the sectional image that is further processed by the apparatus. Especially in cone beam X-ray projections, there is a considerable contribution of inhomogeneous artifacts that need to be corrected.

The invention further comprises a method for the processing of a sectional image that is reconstructed from X-ray projections of an object from different directions, comprising the following steps:

a) The determination of a baseline function that describes spatially slowly varying artifacts of the sectional image.

b) The calculation of a corrected image by compensating the sectional image with the help of said baseline function.

The method comprises in general form the steps that can be executed with an apparatus of the kind described above. Therefore, reference is made to the preceding description for more information on the details, advantages and improvements of the method.

In summary, the present invention proposes a retrospective homogenization procedure. In a preferred embodiment, the reconstructed volume is segmented into bone, tissue and air based on their gray values, and the tissue-regions are used as support in order to fit a spatially slowly varying baseline function representing the smooth shape of cupping or other inhomogeneities. Finally the inverse of the estimated baseline is subtracted from the original slice to correct for the inhomogeneities.

Beside fast calculation another advantage of the proposed method is that, in contrast to projection based correction schemes, the retrospective homogenization does not necessarily need detailed knowledge of system or acquisition parameters.

These and other aspects of the invention will be apparent from and elucidated with reference to the embodiment(s) described hereinafter.

In the following the invention is described by way of example with the help of the accompanying drawings in which:

Fig. 1    is a diagram of the homogenization algorithm according to the present invention;

Fig. 2-5    depict the processing of a simple example slice in different stages of the homogenization algorithm.

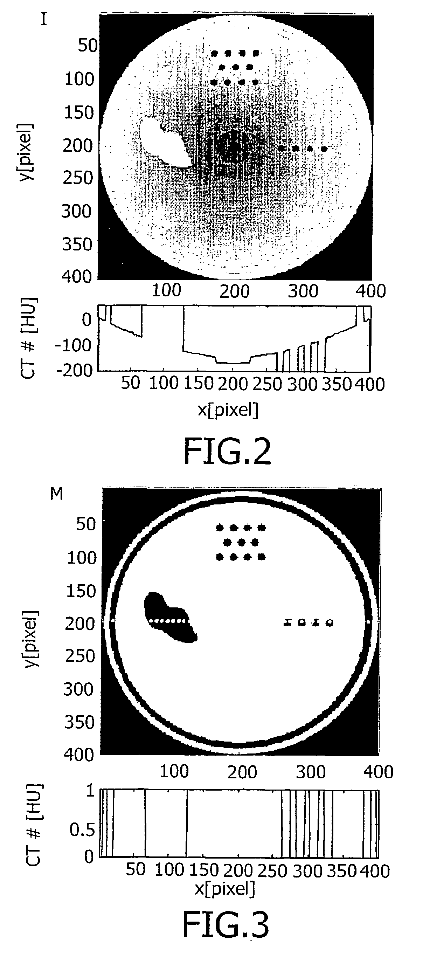

Figure 2 depicts a simple sectional image I through a cylindrical test volume that comprises deeply dark and light structures (representing air and bone in a human body, respectively) embedded in a "tissue" of a mediate gray value. Moreover, there are some structures of small contrast with respect to the "tissue" and a spatially slowly varying inhomogeneity. In the lower part of Figure 2, a diagram of the gray value distribution along horizontal line through the image (at y = 200) is shown. When a tight gray level window is applied to the slice of the reconstructed 3D image in order to find low contrast details, the inhomogeneities cause parts of the region of interest to be either below or above the edges of the applied window. Low contrast details are therefore much more difficult to find in presence of inhomogeneities.

The basic idea of the present invention is to first find in each slice I of a 3D volume a spatially slowly varying 2D baseline representing the smooth shape of cupping or other inhomogeneities and second to subtract this baseline from the original image.

In order to find the baseline, two main problems have to be solved. First, a set of voxels has to be determined that can be used as supporting points for the baseline, and second, a good fit through these points has to be found. An appropriate selection of supporting points can be found by segmenting all voxels into three main classes of matter based on their gray value: air, tissue, and bone. Since the human body consists mainly out of tissue with a linear attenuation coefficient close to water, this can be done by applying a threshold around the linear absorption coefficient of water. The value of the linear absorption coefficient of water can be obtained by calculating it based on the applied X-ray spectrum or by statistical methods applied to the 3D images.

To find a fit through all irregularly distributed supporting points, several methods can be used e.g. based on low-pass filtering, polynomial, and spline fitting or fitting an arbitrary parametric function. The main requirements are to globally model a smooth shape and to not follow local edges. By the choice of the function, application specific prior knowledge can be taken into account. Such information could be, e.g., the typical shape, area or gray level intensity of the inhomogeneities, that can be derived from previous example fits specific for the application. Finally, the estimated cupping baseline is subtracted from the original slice to correct the inhomogeneities. One of the advantages of the proposed retrospective homogenization algorithm is that it does not necessarily need detailed knowledge of system or acquisition parameters.

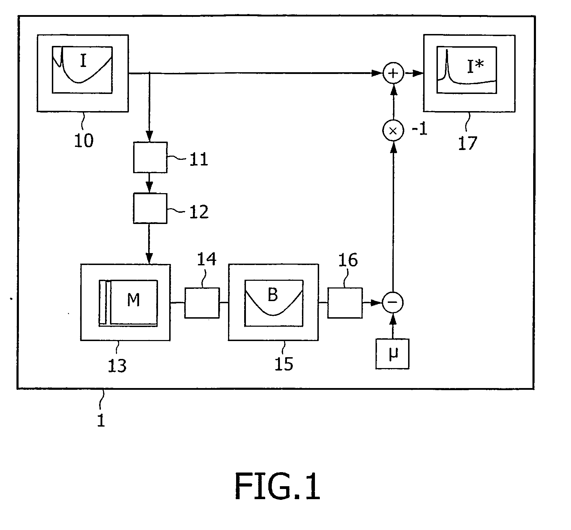

An implementation example of the proposed homogenization algorithm is sketched in Figure 1. Images illustrating the different steps of the algorithm are shown in Figs. 2-5 for a simple mathematical example slice.

The algorithm may be carried out by a computer 1 being connected to an imaging apparatus like a cone beam CT (not shown). The computer will be provided with software for executing the algorithm which is illustrated by the flow chart of Figure 1.

In block 10, the algorithm receives as input the original sectional image I (e.g. a slice of a three-dimensional image). By taking into account the cupping of the original reconstructed volume, a threshold window between -200 HU and +50 HU is applied to the image I in block 11. Since at the edges between tissue and bone or tissue and air steep transitions of the gray values appear that are partly within the threshold window but are not beneficial for the baseline estimation, these border points are eliminated by a morphological erosion algorithm in block 12. Starting from the original slice I, the resulting mask M of voxels selected as "valid tissue" is thus achieved in block 13 and shown in Figure 3 for the example slice of Figure 2.

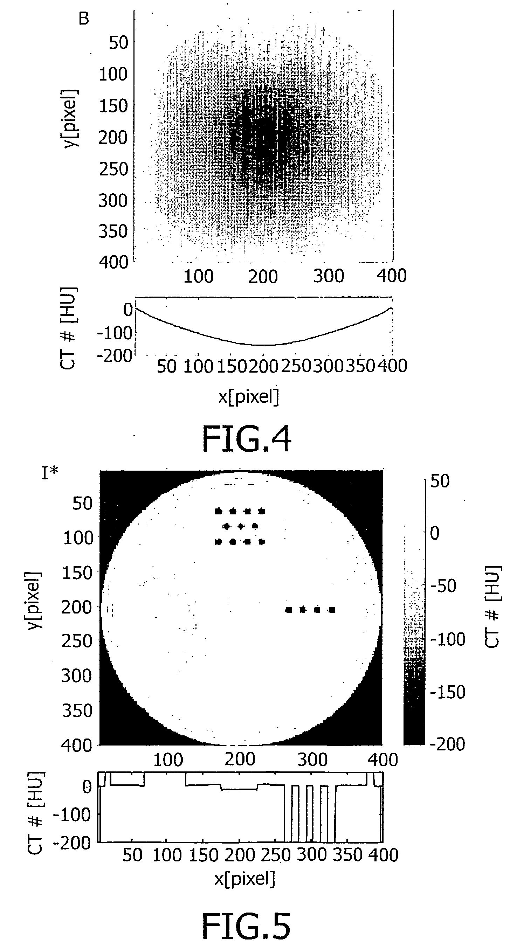

A fit through all supporting points of mask M is calculated in block 14 by fitting a two-dimensional polynomial of sixth order to the data. The obtained baseline B of block 15 is shown in Figure 4 for the example slice of Figure 2. Despite the high order of the polynomial function, stable results are achieved due to the large number of available supporting points. In order to avoid stability problems of the fit outside the imaged object, the region of the object is segmented in block 16 by applying a second threshold followed by a four-neighbor connectivity algorithm. Finally, the estimated baseline is subtracted from the original slice to correct for the inhomogeneities, and the gray level of the image may be shifted to an arbitrary target value like the gray value of water according to the formula

$$I^*(x,y) = I(x,y) - B(x,y) + \mu$$

with $\mu$ being a predetermined constant, e.g. representing the gray value of "water". The result is the corrected image $I^*$ in block 17 or Figure 5 for the example slice of Figure 2. Note that the homogenization algorithm is not intended to restore exact Hounsfield units. Rather, its purpose is to improve the detectability of low contrast details to facilitate the application of tight gray level windows.

A similar procedure can also be applied in 3D space. The only difference would be to fit the baseline function not for each 2D slice separately, but a joint fit directly in 3 dimensions. Another extension of the described method compares the results of neighboring slices demanding for similar functions for the shape of the background.

The estimation of the smooth shape of cupping alternatively can also be done be means of a Fourier decomposition and taking into account only the few first Fourier components. Depending on the data this can be done without the described segmentation or applied on the segmented image M.

Finally it is pointed out that in the present application the term "comprising" does not exclude other elements or steps, that "a" or "an" does not exclude a plurality, and that a single processor or other unit may fulfill the functions of several means. Moreover, reference signs in the claims shall not be construed as limiting their scope.

## Claims

1. Apparatus for the processing of a sectional image (I) that is reconstructed from X-ray projections of an object from different directions, the apparatus being adapted to execute the following steps: a) determination of a baseline function (B) that describes spatially slowly varying artifacts of the sectional image (I)b) calculating a corrected image (I*) by compensating the original sectional image (I) with the help of said baseline function (B), **characterised in that** the baseline function (B) is determined based only on image data that corresponds to regions of the object that primarily comprise water;

2. Apparatus according to claim 1, **characterised in that** the sectional image (I) represents a three-dimensional volume, and that the corresponding three-dimensional baseline function (B) is composed of separate two-dimensional baseline functions that are calculated for two-dimensional slices of the sectional image (I).

3. Apparatus according to claim 1, **characterised in that** the determination of the baseline function (B) comprises the steps of a) segmenting areas (M) from the sectional image (I) in which the reconstructed X-ray density lies within a given interval; b) determination of the baseline function (B) based only on the data of said segmented areas (M).

4. Apparatus according to claim 3, **characterised in that** the baseline function (B) is determined by fitting a parametric model function to the data in the segmented areas (M).

5. Apparatus according to claim 4, **characterised in that** the parametric model function is a spline function and/or a polynomial, preferably a polynomial of sixth degree.

6. Apparatus according to claim 3, **characterised in**

**that** the baseline function is determined by low-pass filtering of the data in the segmented areas (M).

7. Apparatus according to claim 1, **characterised in that** the baseline function is determined by a) spectral analysis of the sectional image (I) or the segmented areas (M) of the sectional image; b) composition of the baseline function from only the lower frequency components of the resulting spectrum.

8. Apparatus according to claim 1, **characterised in that** image areas outside the object are segmented and excluded from the correction with the baseline function (B).

9. Apparatus according to claim 1, **characterised in that** it comprises a rotational cone beam X-ray device for the generation of X-ray projections of an object.

10. Method for the processing of a sectional image (I) that is reconstructed from X-ray projections of an object from different directions, comprising the following steps: a) determination of a baseline function (B) that describes spatially slowly varying artifacts of the sectional image (I); b) calculating a corrected image (I*) by compensating the original sectional image (I) with the help of said baseline function (B), **characterised in that** the baseline function (B) is determined based only on image data that corresponds to regions of the object that primarily comprise water.

## Patentansprüche

1. Gerät zum Verarbeiten eines Schnittbildes (I), das anhand von Röntgenstrahlenprojektionen eines Objekts aus verschiedenen Richtungen rekonstruiert wurde, wobei das Gerät dafür eingerichtet ist, die folgenden Schritte durchzuführen: a) Ermitteln einer Grundlinienfunktion (B), die räumlich langsam variierende Artefakte des Schnittbildes (I) beschreibt, b) Berechnen eines korrigierten Bildes (I*) durch Kompensieren des ursprünglichen Schnittbildes (I) mit Hilfe der genannten Grundlinienfunktion (B), **dadurch gekennzeichnet, dass** die Grundlinienfunktion (B) nur basierend auf Bilddaten ermittelt wird, die mit Regionen des Objekts übereinstimmen, welche hauptsächlich Wasser enthalten.

2. Gerät nach Anspruch 1, **dadurch gekennzeichnet, dass** das Schnittbild (I) ein dreidimensionales Volumen darstellt und dass die entsprechende dreidimensionale Grundlinienfunktion (B) aus separaten zweidimensionalen Grundlinienfunktionen zusammengesetzt ist, die für zweidimensionale Schichten des Schnittbildes (I) berechnet werden.

3. Gerät nach Anspruch 1, **dadurch gekennzeichnet, dass** das Ermitteln der Grundlinienfunktion (B) die folgenden Schritte umfasst: a) Segmentieren von Bereichen (M) aus dem Schnittbild (I), in denen die rekonstruierte Röntgenstrahlendichte innerhalb eines gegebenen Intervalls liegt; b) Ermitteln der Grundlinienfunktion (B) nur basierend auf den Daten der genannten segmentierten Bereiche (M).

4. Gerät nach Anspruch 3, **dadurch gekennzeichnet, dass** die Grundlinienfunktion (B) ermittelt wird, indem eine parametrische Modellfunktion an die Daten in den segmentierten Bereichen (M) angepasst wird.

5. Gerät nach Anspruch 4, **dadurch gekennzeichnet, dass** die parametrische Modellfunktion eine Splinefunktion und/oder ein Polynom, vorzugsweise ein Polynom sechsten Grades, ist.

6. Gerät nach Anspruch 3, **dadurch gekennzeichnet, dass** die Grundlinienfunktion durch Tiefpassfilterung der Daten in den segmentierten Bereichen (M) ermittelt wird.

7. Gerät nach Anspruch 1, **dadurch gekennzeichnet, dass** die Grundlinienfunktion ermittelt wird durch a) Spektralanalyse des Schnittbildes (I) oder der segmentierten Bereiche (M) des Schnittbildes; b) Zusammensetzung der Grundlinienfunktion aus nur den niederfrequenten Komponenten des resultierenden Spektrums.

8. Gerät nach Anspruch 1, **dadurch gekennzeichnet, dass** Bildbereiche außerhalb des Objekts segmentiert werden und von der Korrektur mit der Grundlinienfunktion (B) ausgeschlossen werden.

9. Gerät nach Anspruch 1, **dadurch gekennzeichnet, dass** es eine Rotationskegelstrahlenbündel-Röntgenvorrichtung zur Erzeugung von Röntgenstrahlenprojektionen eines Objekts umfasst.

10. Verfahren zum Verarbeiten eines Schnittbildes (I), das anhand von Röntgenstrahlenprojektionen eines Objekts aus verschiedenen Richtungen rekonstruiert wurde, wobei das Verfahren die folgenden Schritte umfasst: a) Ermitteln einer Grundlinienfunktion (B), die räumlich langsam variierende Artefakte des Schnittbildes (I) beschreibt, b) Berechnen eines korrigierten Bildes (I*) durch Kompensieren des ursprünglichen Schnittbildes (I) mit Hilfe der genannten Grundlinienfunktion (B), **dadurch gekennzeichnet, dass** die Grundlinienfunktion (B) nur basierend auf Bilddaten ermittelt wird, die mit Regionen des Objekts übereinstimmen, welche hauptsächlich Wasser enthalten.

## Revendications

1. Appareil pour le traitement d'une image sectorielle (I) qui est reconstruite à partir de projections à rayons X d'un objet à partir de directions différentes, l'appareil étant adapté de manière à exécuter les étapes suivantes consistant à : a) déterminer une fonction de ligne de base (B) qui décrit des artefacts variables spatialement lents de l'image sectorielle originale (I) ; calculer une image corrigée (I*) en compensant l'image sectorielle (I) à l'aide de ladite fonction de ligne de base (B), **caractérisé en ce que** la fonction de ligne de base (B) n'est déterminée que sur la base de données d'image qui correspondent à des régions de l'objet qui comprennent essentiellement de l'eau.

2. Appareil selon la revendication 1, **caractérisé en ce que** l'image sectorielle (I) représente un volume tridimensionnel et **en ce que** la fonction de ligne de base tridimensionnelle correspondante (B) se compose de fonctions de ligne de base bidimensionnelles séparées qui sont calculées pour des tranches bidimensionnelles de l'image sectorielle (I).

3. Appareil selon la revendication 1, **caractérisé en ce que** la détermination de la fonction de ligne de base (B) comprend les étapes suivantes consistant à : a) segmenter des zones (M) à partir de l'image sectorielle (I) dans laquelle la densité reconstruite de rayons X se situe dans un intervalle donné ; b) ne déterminer la fonction de ligne de base (B) que sur la base des données desdites zones segmentées (M).

4. Appareil selon la revendication 3, **caractérisé en ce que** la fonction de ligne de base (B) est déterminée par l'adaptation d'une fonction de modèle paramétrique aux données dans les zones segmentées (M).

5. Appareil selon la revendication 4, **caractérisé en ce que** la fonction de modèle paramétrique est une fonction spline et/ou un polynôme, de préférence un polynôme de six degrés.

6. Appareil selon la revendication 3, **caractérisé en ce que** la fonction de ligne de base est déterminée par le filtrage passe-bas des données dans les zones segmentées (M).

7. Appareil selon la revendication 1, **caractérisé en ce que** la fonction de ligne de base est déterminée par a) l'analyse spectrale de l'image sectorielle (I) ou des zones segmentées (M) de l'image sectorielle ; b) la composition de la fonction de ligne de base de seules les composantes de plus basse fréquence du spectre ainsi obtenu.

8. Appareil selon la revendication 1, **caractérisé en ce que** les zones d'image en dehors de l'objet sont segmentées et exclues de la correction avec la fonction de ligne de base (B).

9. Appareil selon la revendication 1, **caractérisé en ce qu'**il comprend un dispositif à rayons X de faisceau conique de rotation pour la génération de projections à rayons X d'un objet.

10. Procédé pour le traitement d'une image sectorielle (I) qui est reconstruite à partir de projections à rayons X d'un objet à partir de directions différentes, comprenant les étapes suivantes consistant à : a) déterminer une fonction de ligne de base (B) qui décrit des artefacts variables spatialement lents de l'image sectorielle (I) ; calculer une image corrigée (I*) en compensant l'image sectorielle originale (I) à l'aide de ladite fonction de ligne de base (B), **caractérisé en ce que** la fonction de ligne de base (B) n'est déterminée que sur la base de données d'image qui correspondent à des régions de l'objet qui comprennent essentiellement de l'eau.

FIG.1

FIG.2

FIG.3

FIG.4

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAHER K. P. ; MALONE J. F.** Computerized scatter correction in diagnostic radiology. *Contemporary Physics,* 1997, vol. 38 (2), 131-148
- **R. M. LEWITT.** Processing of incomplete measurement data in computed tomography. *Med. Phys.,* 1979, vol. 6 (5), 412-417
- **READER A J et al.** Adaptive correction of scatter and random events for 3-D backprojected PET data. *IEEE TRANSACTIONS ON NUCLEAR SCIENCE IEEE USA,* August 2001, vol. 48 (4), ISSN 0018-9499, 1350-1356
- **WATSON C C.** New, faster, image-based scatter correction for 3D PET. *IEEE TRANSACTIONS ON NUCLEAR SCIENCE IEEE USA,* August 2000, vol. 47 (4), ISSN 0018-9499, 1587-1594
- **ZAIDI H.** Scatter modelling and correction strategies in fully 3-D PET. *NUCLEAR MEDICINE COMMUNICATIONS,* November 2001, vol. 22 (11), ISSN 0143-3636, 1181-1184
- **LOVE L.A. ; KRUGER R.A.** Scatter estimation for a digital radiographic system using convolution filtering. *Medical Physics,* March 1987, vol. 12 (2), 178-185